# FASCICULE DE BREVET EUROPEEN

(11) **EP 2 721 317 B1**
(45) Date de publication et mention de la délivrance du brevet: **30.09.2015**
(21) Numéro de dépôt: 12725479.5
(22) Date de dépôt: 25.04.2012
(51) Int. Cl.: F16F 15/123, F16F 15/14

(54) **DISPOSITIF D'AMORTISSEMENT DE TORSION COMPORTANT DES MASSELOTTES PENDULAIRES DECALEES AXIALEMENT PAR RAPPORT A DES RONDELLES DE GUIDAGE**
TORSIONSDÄMPFER MIT IN RELATION ZU DEN FÜHRUNGSSCHEIBEN ACHSVERSETZTEN PENDELARTIGEN FLIEHGEWICHTEN
TORSION DAMPING DEVICE COMPRISING PENDULAR FLYWEIGHTS THAT ARE AXIALLY OFFSET IN RELATION TO GUIDE WASHERS

(30) Priorité: 14.06.2011 FR 1155180
(43) Date de publication de la demande: 23.04.2014
(73) Titulaire: Valeo Embrayages, 80009 Amiens Cedex 2 (FR)
(72) Inventeur: VERHOOG, Roel, F-60190 Gournay Sur Aronde (FR); RENIER, Lionel, F-80800 Villiers Bretonneux (FR)
(74) Mandataire: Tran, Chi-Hai
(86) Numéro de dépôt international: PCT/FR2012/050918
(87) Numéro de publication internationale: WO 2012/172225

(56) Documents cités:
- EP-A2- 1 780 434
- DE-A1-102008 057 648
- DE-A1-102009 002 481
- US-A1- 2010 269 497

## Description

L'invention concerne un dispositif d'amortissement de torsion entre un arbre moteur et un arbre mené coaxiaux d'orientation axiale dans un système d'accouplement temporaire de véhicule automobile comprenant des premiers moyens d'amortissement par des organes élastiques, et des deuxièmes moyens d'amortissement par des masselottes pendulaires.

L'invention concerne plus particulièrement un dispositif d'amortissement de torsion entre un arbre moteur et un arbre mené coaxiaux d'orientation axiale dans un système d'accouplement temporaire de véhicule automobile, le dispositif étant équipé de premiers moyens d'amortissement de torsion qui comportent :
- un élément d'entrée de couple et un élément de sortie de couple montés rotatif autour d'un axe coaxial à celui des arbres ;
- au moins deux organes élastiques à action circonférentielle qui sont interposés circonférentiellement en série entre l'élément d'entrée et l'élément de sortie ;
- deux rondelles radiales de guidage qui sont agencées axialement de part et d'autre des organes élastiques et qui comportent des moyens de maintien axial des organes élastiques, les rondelles de guidage comportant une portion périphérique qui s'étend radialement vers l'extérieur depuis les moyens de maintien axial ;
- au moins une rondelle radiale de phasage qui est libre en rotation par rapport à l'élément d'entrée et par rapport à l'élément de sortie, la rondelle de phasage comportant au moins une patte radiale de phasage qui est interposée circonférentiellement entre les deux organes élastiques en série ;
le dispositif d'amortissement étant équipé de deuxièmes moyens d'amortissement de torsion qui comportent :
- au moins une masselotte pendulaire qui est montée oscillante dans un plan radial sur un élément de support qui est solidaire en rotation avec la rondelle de phasage.

Les dispositif d'amortissement de ce type équipent par exemple des installation d'embrayage à friction sec ou humide, ou encore des installation d'embrayage destinées à verrouiller un convertisseur hydrodynamique.

Un moteur à explosion présente des acyclismes du fait de la succession des explosions dans les cylindres du moteur. Les moyens amortisseurs de torsion permettent de filtrer ces acyclismes avant de transmettre le couple moteur à une boîte de vitesses. Il est en effet nécessaire d'amortir les vibrations avant qu'elles ne pénètrent dans la boîte de vitesse et ne provoquent une nuisance sonore inacceptable.

Pour ce faire, il est connu d'interposer un dispositif d'amortissement de torsion entre l'arbre moteur et l'arbre de boîte de vitesses. Le dispositif d'amortissement de torsion est généralement agencé dans un système d'embrayage qui permet la liaison temporaire en rotation de l'arbre moteur avec l'arbre de boîte de vitesses.

Le dispositif d'amortissement de torsion comporte généralement des premiers moyens d'amortissement par interposition d'organes élastiques à action circonférentielle entre un élément d'entrée de couple et un élément de sortie de couple.

De tels premiers moyens d'amortissement sont avantageusement complétés par des deuxièmes moyens d'amortissement par masselottes pendulaires. Ces masselottes pendulaires, encore appelées oscillateurs pendulaires, s'étendent autour de l'axe de rotation de l'arbre moteur et sont libres d'osciller autour d'un axe fictif sensiblement parallèle à l'axe de rotation de l'arbre moteur. Lorsque les masses pendulaires réagissent aux irrégularités de rotation, elles oscillent de manière à ce que le centre de gravité de chacune de ces masses pendulaires oscille autour d'un axe sensiblement parallèle à l'axe de rotation de l'arbre moteur. La position radiale du centre de gravité de chacune des masses pendulaires par rapport à l'axe de rotation de l'arbre moteur ainsi que la distance de ce centre de gravité par rapport à l'axe fictif d'oscillations sont établies de manière à ce que sous l'effet des forces centrifuges, la fréquence d'oscillation de chacune des masses pendulaires soit proportionnelle à la vitesse de rotation de l'arbre moteur, ce multiple pouvant par exemple prendre une valeur proche du rang de l'harmonique prépondérant des vibrations responsables des fortes irrégularités de rotation.

Dans les dispositifs de l'art antérieur, les masselottes pendulaires sont généralement situées radialement au-dessus des premiers moyens d'amortissement. Dans ce cas, l'encombrement radial des masselottes pendulaires est nécessairement limité afin de ne pas diminuer de manière trop importante le diamètre d'implantation des organes élastique et diminuer ainsi, l'efficacité des premiers moyens d'amortissement. Ainsi, dans l'art antérieur, du fait de ces contraintes d'encombrement, la masse des masselottes pendulaires ne peut être augmenté qu'au détriment de l'efficacité des moyens d'amortissement à organes élastiques.

Le document US2010/0269497 A1, considéré comme le document le plus proche de l'art antérieur, décrit un tel dispositif avec masselottes.

Or, un tel dispositif d'amortissement est plus efficace lorsqu'on augmente la masse des masselottes.

L'invention propose un dispositif d'amortissement du type décrit précédemment, caractérisé en ce que l'élément de support est décalé axialement d'un même côté par rapport aux portions périphériques des deux rondelles de guidage de manière que la masselotte pendulaire soit décalée axialement d'un même côté par rapport aux portions périphériques des deux rondelles de guidage.

Ainsi, pour un encombrement donné, la masse des masselottes et, par conséquent, leur efficacité ainsi que l'efficacité des moyens d'amortissement à ressort élastique peuvent être augmentées. Selon d'autres caractéristiques de l'invention :
- les deuxièmes moyens d'amortissement comportent au moins une paire de masselottes qui sont agencées axialement en vis-à-vis de part et d'autre de l'élément de support, le décalage axial de l'élément de support étant réalisé de manière que les deux masselottes soient décalées axialement d'un même côté des portions périphériques des deux rondelles de guidage ;
- les rondelles de guidage forment les éléments d'entrée de couple ;
- le bord d'extrémité radialement intérieur des masselottes est agencé par rapport à l'axe de rotation à une distance radiale qui est inférieure à l'encombrement radial de l'ensemble formé par l'élément d'entrée et l'élément de sortie ;
- l'élément de support est réalisé venu de matière avec la rondelle de phasage ;
- l'élément de support est une pièce rapportée qui est fixée sur la rondelle de phasage ;
- la rondelle de phasage comporte au moins un bras périphérique qui s'étend au moins partiellement dans la direction axiale afin de permettre le décalage axial de l'élément de support ;
- le bras axial est agencé radialement à l'extérieur par rapport aux organes élastiques ;
- l'élément de support est fixé à la rondelle de phasage par rivetage ;
- l'élément de support est fixé à la rondelle de phasage par soudage ;
- la patte de phasage comporte des rebords pour maintenir radialement les organes élastiques, les rebords étant portés par une pièce rapportée qui est fixée sur la rondelle de phasage ;
- l'élément de support présente la forme d'un anneau qui s'étend dans un plan radial.

L'invention concerne aussi un convertisseur de couple comportant un moyeu cannelé d'entrée de couple qui est solidaire en rotation avec l'élément d'entrée de couple, le convertisseur étant équipé d'un dispositif d'amortissement réalisé selon les enseignements de l'invention, caractérisé en ce qu'au moins une masselotte est agencé radialement en vis-à-vis du moyeu cannelé.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue en coupe axiale qui représente un dispositif d'amortissement réalisé selon un premier mode de réalisation de l'invention ;
- la figure 2 est une vue en perspective qui représente la rondelle de phasage du dispositif de la figure 1 ;
- la figure 3 est une vue en perspective qui représente le dispositif d'amortissement de la figure 1 ;
- la figure 4 est une vue en section axiale passant par les organes élastiques qui représente le dispositif d'amortissement de la figure 1 ;
- la figure 5 est une vue en coupe similaire à celle de la figure 1 qui représente un deuxième mode de réalisation de l'invention.

Pour la suite de la description, on adoptera de manière non limitative des orientations :
- axiale dirigée d'arrière en avant selon l'axe de rotation du dispositif d'amortissement, et indiquée par la flèche "A" des figures,
- radiale dirigée orthogonalement à l'axe de rotation du dispositif d'amortissement de l'intérieur vers l'extérieur en s'éloignant dudit axe ;
- circonférentielle dirigée orthogonalement à l'axe du dispositif d'amortissement et orthogonalement à la direction radiale.

Pour la suite de la description, des éléments présentant des fonctions similaires, identiques ou analogues seront désignés par des mêmes numéros de référence.

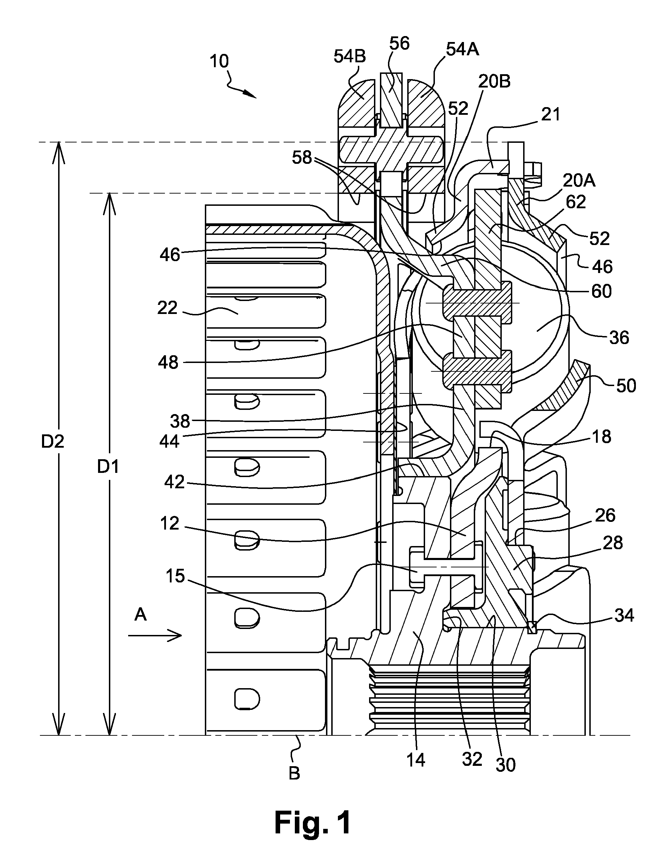

On a représenté à la figure 1 un dispositif 10 d'amortissement de torsion réalisé selon un premier mode de réalisation de l'invention. Le dispositif 10 d'amortissement est destiné à être agencé dans un système d'accouplage temporaire de véhicule automobile. Le dispositif 10 d'amortissement est ici destiné à être agencé dans un convertisseur de couple (non représenté) pour accoupler avec amortissement de torsion le carter du convertisseur de couple à un embrayage de verrouillage du convertisseur.

Le dispositif 10 d'amortissement de torsion réalisé selon les enseignements de l'invention est aussi applicable à tout autre type de systèmes d'embrayage.

Le dispositif 10 d'amortissement de torsion permet d'accoupler un premier arbre (non représenté) moteur et un deuxième arbre (non représenté) mené coaxiaux d'axe "B" avec amortissement de torsion.

Comme représenté à la figure 1, le dispositif 10 comporte un élément de sortie de couple qui est ici formé par un voile 12 radial de sortie. Le voile 12 de sortie présente une forme de rondelle circulaire coaxiale à l'axe "B".

Le voile 12 de sortie est destiné à être lié en rotation au deuxième arbre mené par l'intermédiaire d'un moyeu mené 14. Le voile 12 de sortie est lié en rotation avec le moyeu mené 14 par l'intermédiaire de rivets 15.

Le voile 12 de sortie présente trois pattes radiales (non représentées). Les pattes sont agencées régulièrement autour de l'axe "B" globalement à 120° les unes des autres. Chaque patte s'étend radialement en saillie par rapport au bord périphérique extérieur 18 du voile 12 de sortie. Le bord périphérique extérieur 18 est visible à la figure 1.

Comme représenté aux figures 1 à 3, le dispositif 10 d'amortissement présente en outre un élément d'entrée de couple qui est ici formé par une première rondelle radiale d'entrée 20A avant et par une deuxième rondelle radiale d'entrée 20B arrière. Les rondelles d'entrée 20A, 20B sont parallèles entre elles et elles sont agencées axialement de part et d'autre du voile 12 de sortie. La rondelle d'entrée 20B arrière est liée en rotation avec la rondelle d'entrée 20A avant par l'intermédiaire d'ergots axiaux 21 qui sont agencés sur un bord extérieur de la rondelle d'entrée 20B arrière, comme cela est représenté à la figure 1.

Les deux rondelles d'entrée 20A, 20B sont liées en rotation au premier arbre moteur par l'intermédiaire d'un moyeu 22 cannelé, également appelé porte-disque, sur lequel est monté mobile axialement un piston d'un verrouillage d'embrayage (non représenté, couramment appelé "lock-up". Le piston de "lock-up" est mobile entre une position dépontée et une position de pontage du convertisseur permettant d'accoupler le carter du convertisseur de couple à l'arbre d'entrée d'une boîte de vitesse automatique. Le moyeu cannelé 22 est agencé à l'arrière du dispositif 10 d'amortissement. La rondelle d'entrée 20B arrière est fixée au moyeu cannelé 22 par l'intermédiaire de rivets (non représentés).

Chaque rondelle d'entrée 20A, 20B présente un flasque radial qui est pourvu d'un passage central pour permettre le passage de l'arbre mené et du moyeu mené 14 du voile 12 de sortie.

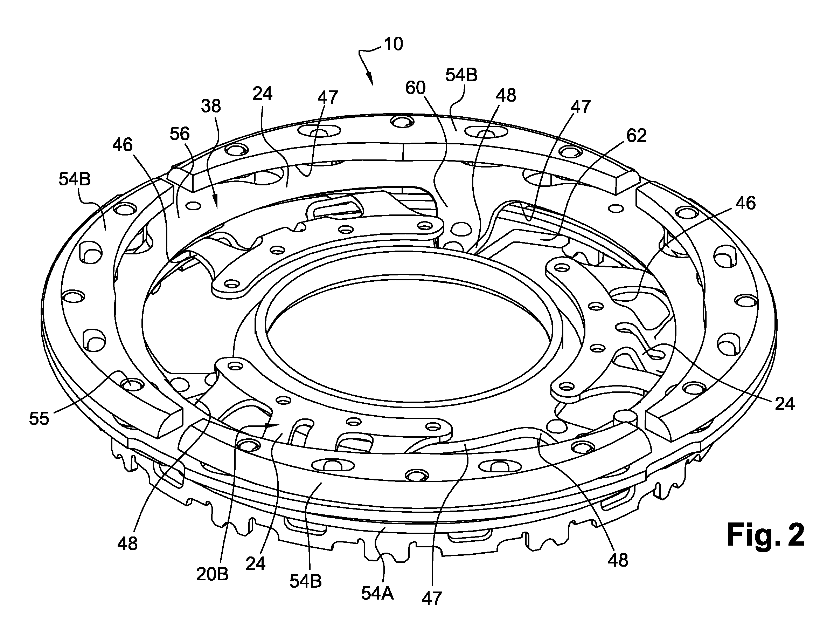

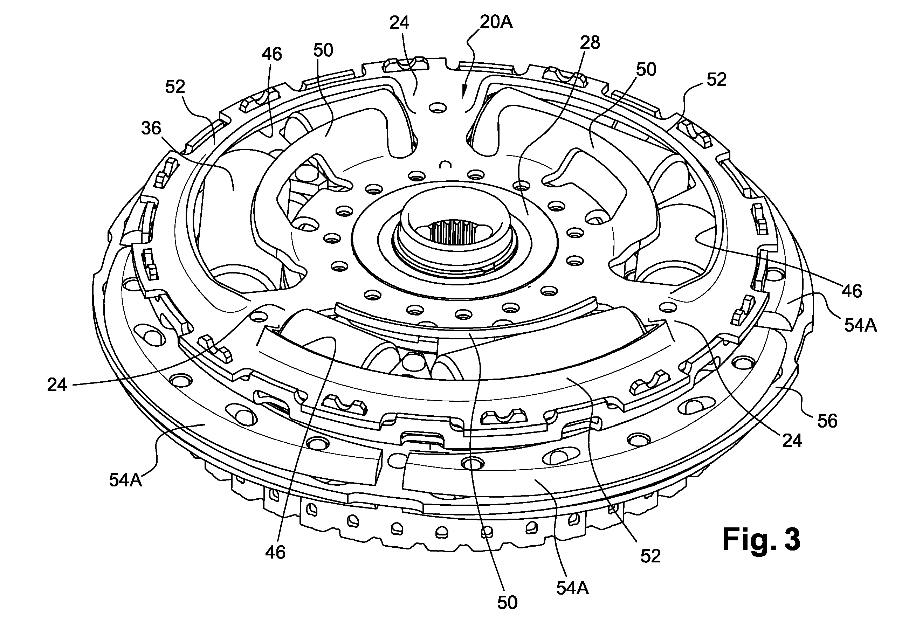

Comme représenté aux figures 2 et 3, chaque rondelle d'entrée 20A, 20B comporte en outre trois pattes 24 extérieures de poussée qui sont agencées en coïncidence avec les pattes du voile 12 de sortie. Les pattes du voile 12 de sortie sont ainsi interposées axialement entre les pattes 24 des rondelles d'entrée 20A avant et 20B arrière.

Lorsque les deux rondelles d'entrée 20A, 20B sont assemblées, leurs flasques sont écartés d'une distance axiale suffisante pour permettre au voile 12 de sortie de tourner entre les deux rondelles d'entrée 20A, 20B.

La rondelle d'entrée 20A avant est montée tournante librement sur une première face cylindrique extérieure 26 de guidage d'un palier 28 central. Le palier 28 est lui-même monté tournant sur une face cylindrique extérieure 30 d'un tronçon avant du moyeu mené 14. Les déplacements axiaux du palier 28 sont limités vers l'arrière par une face d'épaulement 32 du moyeu mené 14, tandis qu'ils sont limités axialement vers l'avant par un anneau élastique 34 qui est monté dans une gorge du moyeu mené 14.

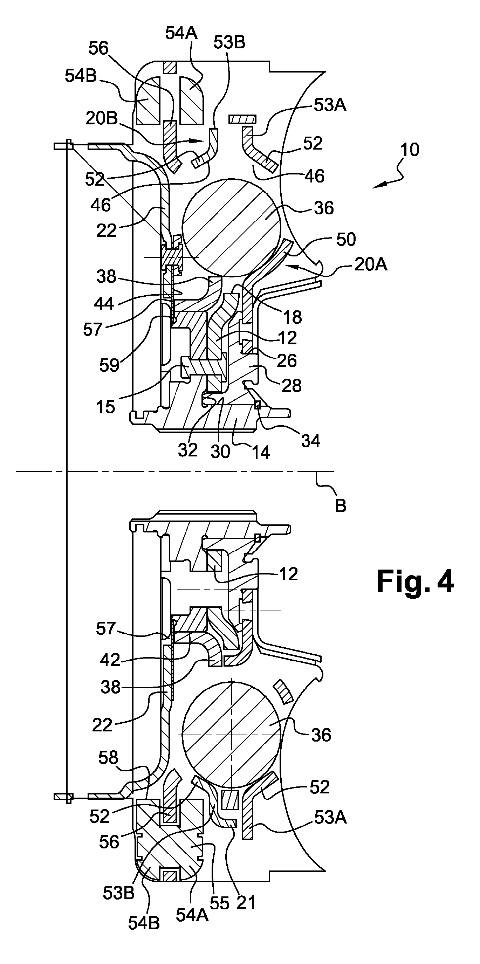

Dans l'exemple représenté aux figures, les rondelles d'entrée 20A, 20B et le moyeu cannelé 22 sont en outre centrés par rapport au moyeu mené 14 par l'intermédiaire d'une plaque 57 radiale de tôle représentée sur la figure 4. Cette plaque 57 est prise axialement en sandwich entre d'une part le moyeu cannelé 22 et d'autre part la rondelle d'entrée 20B arrière. La plaque 57 est fixée au moyeu cannelé 22 par rivetage. La plaque 57 comporte un orifice central dont le pourtour vient radialement en appui contre une portée 59 formée sur le moyeu afin d'effectuer un centrage du moyeu cannelé 22 et des rondelles d'entrée 20A, 20B.

Le dispositif 10 d'amortissement comporte en outre des organes élastiques 36 à action circonférentielle. De manière non limitative, le dispositif 10 d'amortissement comporte ici six organes élastiques 36. Les organes élastiques 36 sont ici formés par des ressorts hélicoïdaux d'axe principal d'orientation circonférentielle.

Comme cela est visible à la figure 3, les organes élastiques 36 sont agencés en une rangée circulaire autour du bord périphérique 18 du voile 12 de sortie. En d'autres termes, les organes élastiques 36 sont ici implantés sur un cercle centré sur l'axe de rotation "B".

Les organes élastiques 36 sont répartis en trois groupes de deux organes élastiques 36. Les organes élastiques 36 de chaque groupe sont logés circonférentiellement en série, c'est-à-dire bout à bout, entre deux pattes du voile 12 de sortie et entre deux pattes 24 des rondelles d'entrée 20A, 20B.

Les deux organes élastiques 36 de chaque groupe étant montés en série, les deux extrémités en vis-à-vis de ces deux organes élastiques 36 sont susceptibles de prendre appui l'une sur l'autre lors de la transmission d'un couple entre les rondelles d'entrée 20A, 20B et le voile 12 de sortie.

Le guidage et le maintien axial en position des organes élastiques 36 est réalisé par des rondelles de guidage. Les rondelles de guidage sont ici formées par les rondelles d'entrée 20A, 20B.

Les rondelles d'entrée 20A, 20B sont agencées axialement de part et d'autre des organes élastiques 36.

Chaque rondelle d'entrée 20A, 20B est ajourée de trois fenêtres 46 dont chacune est agencée en coïncidence avec deux organes élastiques 36 associés, comme représenté aux figures 2 et 3. Les fenêtres 46 sont séparées par les pattes 24 radiales. Chaque fenêtre 46 est susceptible de loger une portion d'extrémité axiale de l'organe élastique 36.

Chaque fenêtre 46 est bordée :
- radialement vers l'intérieur par une languette 50 intérieure qui s'étend depuis un bord circonférentiel intérieur de la fenêtre 46, et
- radialement vers l'extérieur par une languette 52 extérieure qui s'étend depuis un bord circonférentiel extérieur de la fenêtre 46.

Les languettes 50, 52 forment des moyens de maintien axial pour l'organe élastique 36 associé.

Les fenêtres 46 forment ainsi des logements pour recevoir les organes élastiques 36 et les languettes 50, 52 empêchent les organes élastiques 36 de sortir axialement à travers les fenêtres 46. Les organes élastiques 36 sont ainsi emprisonnés axialement entre les deux rondelles d'entrée 20A, 20B.

Comme représenté aux figures, chaque rondelle d'entrée 20A, 20B, formant aussi rondelles de guidage, comporte une portion annulaire périphérique 53A, 53B en forme de bande radiale qui s'étend radialement vers l'extérieur depuis le bord extérieur des fenêtres 46.

La languette extérieur 52 des fenêtres 46 de la rondelle d'entrée avant 20A s'étend axialement en saillie vers l'avant par rapport à la portion périphérique 53A, tandis que la languette extérieure 52 des fenêtres 46 de la rondelle d'entrée arrière 20B s'étend axialement en saillie vers l'arrière par rapport à la portion périphérique 53B,

Pour que les organes élastiques 36 soient sollicités sensiblement selon leur axe principal circonférentiel, il est connu d'équiper le dispositif 10 d'amortissement avec un organe de phasage.

Un tel organe de phasage est ici formé par une rondelle radiale de phasage 38. Comme cela est illustré à la figure 1, la rondelle de phasage 38 est interposée entre la rondelle d'entrée 20B arrière et le voile 12 de sortie.

La rondelle de phasage 38 est montée libre en rotation par rapport au voile 12 de sortie, d'une part, et par rapport aux rondelles d'entrée 20A, 20B, d'autre part.

La rondelle de phasage 38 est montée tournante librement sur une deuxième face cylindrique 42 extérieure du moyeu mené 14. La rondelle de phasage 38 est ainsi centrée sur le moyeu mené 14. La deuxième face cylindrique 42 extérieure est agencée axialement en arrière de la première face cylindrique 30 extérieure. La deuxième face cylindrique 42 extérieure présente un diamètre inférieur à celui de la première face cylindrique extérieure 30 du moyeu mené 14.

La rondelle de phasage 38 est appuyée axialement vers l'arrière contre une face radiale 44 qui est fixe par rapport au moyeu cannelé 22 ou à la rondelle d'entrée 20B arrière. Ceci permet de positionner axialement la rondelle de phasage 38 par rapport aux rondelles d'entrée 20A, 20B. Dans le mode de réalisation représenté de manière détaillée sur la figure 4, la rondelle de phasage 38 est en appui contre la face 44 avant de la plaque 57.

Comme cela est représenté à la figure 2, la rondelle de phasage 38 est ajourée de trois fenêtres 47 qui sont séparées circonférentiellement les unes des autres par des pattes 48 radiales de phasage. Chaque fenêtre 47 est destinée à loger deux organes 36 élastiques adjacents dont chacun appartient à un groupe différent.

Comme représenté à la figure 2, une patte 48 de phasage de la rondelle de phasage 38 est interposée circonférentiellement entre les deux organes élastiques 36 en série de chaque groupe.

Lors du fonctionnement du dispositif 10 d'amortissement, les organes élastiques 36 sont comprimés entre les pattes 24 de poussée des rondelles d'entrée 20A, 20B et les pattes du voile 12 de sortie de manière à amortir les variations brusques de couple. Les rondelles d'entrée 20A, 20B tournent d'un angle déterminé autour de l'axe "B" par rapport au voile 12 de sortie en provoquant la compression des deux organes élastiques 36 de chaque groupe. Les pattes 48 de phasage de la rondelle de phasage 38 transmettent l'effort de compression d'un organe élastique 36 vers l'autre. Du fait de cette compression, la rondelle de phasage 38 tourne de la moitié de l'angle déterminé par rapport aux rondelles d'entrée 20A, 20B.

Le dispositif 10 d'amortissement est en outre équipé de deuxièmes moyens d'amortissement de torsion du type pendulaire. De tels deuxièmes moyens d'amortissement comportent au moins une paire de masselottes pendulaires 54A, 54B qui sont montées oscillantes dans un plan radial sur un élément de support. Les deux masselottes pendulaires 54A, 54B d'une paire sont agencées axialement en vis-à-vis l'une de l'autre. Les deux masselottes pendulaires 54A, 54B de chaque paire sont identiques par symétrie par rapport à un plan radial.

Comme représenté à la figure 2, les deux masselottes pendulaires 54A, 54B de la paire sont montées oscillantes sur la rondelle de phasage 38 par exemple par l'intermédiaire de pions 55 axiaux de fixation qui sont reçus coulissant dans un orifice oblong de guidage de la rondelle de phasage 38. Un tel montage est bien connu et ne sera pas décrit plus en détail par la suite.

L'élément de support 56 est entraîné en rotation par l'arbre moteur, avant ou après amortissement par les organes élastiques 36.

L'élément de support 56 est ici formé par une bande annulaire extérieure qui est solidaire en rotation avec la rondelle de phasage 38. Ainsi, les masselottes 54A, 54B sont soumises à une force centrifuge maximale lors de la rotation rapide du dispositif 10 d'amortissement. L'élément de support 56 est ici réalisé venu de matière avec la rondelle de phasage 38.

Comme représenté à la figure 3, chaque masselotte pendulaire 54A, 54B présente une forme de plaquette qui s'étend dans un plan radial. Chaque masselotte pendulaire 54A, 54B est incurvée, sensiblement en un arc de cercle, qui s'étend ici sur un angle d'environ 85°, de manière que le contour extérieur de chaque masselotte pendulaire 54A, 54B épouse le bord périphérique extérieur de l'élément de support 56.

Les masselottes pendulaires 54A, 54B d'une paire sont agencées axialement de part et d'autre de l'élément de support 56. Ainsi, la masselotte pendulaire 54A avant est agencée en vis-à-vis de la face avant de l'élément de support 56, tandis que la masselotte pendulaire 54B arrière est agencée en vis-à-vis de la face arrière de l'élément de support 56.

Dans l'exemple représenté aux figures 2 et 3, le dispositif 10 d'amortissement présente six paires de masselottes pendulaires 54A, 54B qui sont réparties régulièrement sur le long de l'élément de support 56 annulaire de la rondelle de phasage 38. Les masselottes pendulaires 54A, 54B sont agencées en cercle autour de l'axe "B" de rotation. Ainsi, le dispositif 10 d'amortissement est équilibré.

L'élément de support 56 est décalé axialement par rapport aux pattes radiales de phasage 48 de manière que les deux masselottes 54A, 54B de chaque paire soient agencées axialement du même côté par rapport aux pattes 48 de phasage. Dans l'exemple représenté aux figures, l'élément de support 56 est décalé axialement vers l'arrière par rapport aux pattes de phasage 48 de manière que les masselottes pendulaires 54A, 54B occupent un espace situé radialement à l'extérieur du moyeu cannelé 22.

L'élément de support 56 est plus particulièrement agencé axialement en vis-à-vis de la portion périphérique 53B de la rondelle d'entrée 20B arrière.

En d'autres termes, l'élément de support 56 est aussi décalé axialement vers l'arrière par rapport aux portions périphériques 53A, 53B des deux rondelles de guidage 20A, 20B.

Le décalage axial de l'élément de support 56 est suffisant pour que les deux masselottes pendulaires 54A, 54B soit décalées axialement vers l'arrière par rapport aux portions périphériques 53A, 53B des deux rondelles de guidage 20A, 20B.

Selon une variante non représentée de l'invention, seule la masselotte arrière est décalée axialement vers l'arrière par rapport à la portion périphérique de la rondelle d'entrée arrière. La masselotte avant est alors agencée radialement en vis-à-vis de la portion périphérique de l'une et/ou l'autre des rondelles d'entrée.

Le bord d'extrémité radialement intérieur 58 des masselottes 54A, 54B est agencé à une distance radiale "D1" de l'axe "B" de rotation qui est inférieure à l'encombrement radial "D2" de l'ensemble formé par le voile 12 de sortie et les rondelles d'entrée 20A, 20B.

Le décalage axial de l'élément de support 56 est obtenu grâce à un bras 60 qui s'étend au moins partiellement vers l'arrière depuis le bord d'extrémité extérieur de la patte de phasage 48, comme cela est visible aux figures 1 et 2. Le bras 60 axial est ainsi agencé radialement à l'extérieur par rapport aux organes élastiques 36. Ce bras 60 passe au travers de la rondelle de guidage 20B arrière. Ainsi, la portion de la rondelle de phasage 38 qui porte les pattes de phasage 48 est interposée axialement entre les rondelles d'entrée avant 20A et arrière 20B tandis que l'élément de support 56 est agencé axialement en arrière de la portion périphérique 53B de la rondelle d'entrée 20B arrière.

Dans la configuration représentée aux figures, une partie radialement intérieure des masselottes est susceptible d'occuper un espace libre axialement en arrière de la rondelle d'entrée 20B arrière. Au moins une masselotte, ici la masselotte arrière 54B, est ainsi agencée radialement en vis-à-vis du moyeu 22 cannelé. La masselotte avant 54A est ici agencée radialement en vis-à-vis de la languette extérieure 52 des fenêtres 46.

A encombrement radial égal, le dispositif 10 d'amortissement selon l'invention est ainsi susceptible de comporter des masselottes 54A, 54B plus lourdes que celles d'un dispositif réalisé selon l'état de la technique. Ceci permet d'améliorer l'efficacité des deuxièmes moyens d'amortissement sans augmenter l'encombrement axial du dispositif 10 d'amortissement.

La rondelle de phasage 38 comporte aussi des moyens de retenus radialement vers l'extérieur des organes élastiques. Ces moyens de retenus sont formés par des rebords 62 qui s'étendent circonférentiellement en saillie depuis les pattes de phasage 48, comme cela est particulièrement visible à la figure 2. Ces rebords 62 sont ici portés par des éléments rapportés et fixés sur les pattes de phasage 48. Chaque élément rapporté comporte deux rebords 62 opposés.

En variante, les moyens de retenue sont réalisés venue de matière avec la rondelle de phasage.

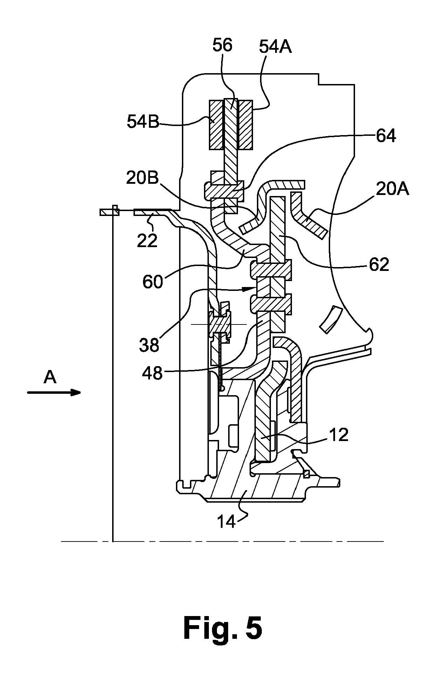

Selon un deuxième mode de réalisation de l'invention qui est représentée à la figure 5, l'élément de support 56 est une pièce rapportée qui est fixée sur un bord d'extrémité extérieur de la rondelle de phasage 38. Ce mode de réalisation permet notamment de pouvoir tester les moyens d'amortissement à organes élastiques et les moyens d'amortissement à masselottes pendulaires de manière indépendante.

Dans l'exemple représenté à la figure 2, l'élément de support 56 est fixé au moyen d'un rivet 64.

En variante, l'élément de support est fixé par soudage.

Le dispositif 10 d'amortissement réalisé selon les enseignements de l'invention permet ainsi d'augmenter le poids des masselottes pendulaires 54A, 54B sans augmenter l'encombrement radial du dispositif 10 d'amortissement.

## Revendications

1. Dispositif (10) d'amortissement de torsion entre un arbre moteur et un arbre mené coaxiaux d'orientation axiale dans un système d'accouplement temporaire de véhicule automobile, le dispositif (10) étant équipé de premiers moyens d'amortissement de torsion qui comportent :
- un élément (20A, 20B) d'entrée de couple et un élément (12) de sortie de couple montés rotatif autour d'un axe coaxial à celui des arbres ;
- au moins deux organes élastiques (36) à action circonférentielle qui sont interposés circonférentiellement en série entre l'élément d'entrée (20A, 20B) et l'élément de sortie (12) ;
- deux rondelles radiales de guidage (20A, 20B) qui sont agencées axialement de part et d'autre des organes élastiques (36) et qui comportent des moyens (46, 50, 52) de maintien axial des organes élastiques (36), les rondelles (20A, 20B) de guidage comportant une portion périphérique qui s'étend radialement vers l'extérieur depuis les moyens (46, 50, 52) de maintien axial ;
- au moins une rondelle radiale de phasage (38) qui est libre en rotation par rapport à l'élément (20A, 20B) d'entrée et par rapport à l'élément (12) de sortie, la rondelle de phasage (38) comportant au moins une patte (48) radiale de phasage qui est interposée circonférentiellement entre les deux organes élastiques (36) en série ;
le dispositif d'amortissement étant équipé de deuxièmes moyens d'amortissement de torsion qui comportent :
- au moins une masselotte pendulaire (54A, 54B) qui est montée oscillante dans un plan radial sur un élément de support (56) qui est solidaire en rotation avec la rondelle de phasage (38) ;
**caractérisé en ce que** l'élément de support (56) est décalé axialement d'un même côté par rapport aux portions périphériques des deux rondelles de guidage (20A, 20B) de manière que la masselotte pendulaire (54A, 54B) soit décalée axialement d'un même côté par rapport aux portions périphériques des deux rondelles de guidage (20A, 20B).

2. Dispositif (10) selon la revendication précédente, **caractérisé en ce que** les deuxièmes moyens d'amortissement comportent au moins une paire de masselottes (54A, 54B) qui sont agencées axialement en vis-à-vis de part et d'autre de l'élément de support (56), le décalage axial de l'élément de support (56) étant réalisé de manière que les deux masselottes (54A, 54B) soient décalées axialement d'un même côté des portions périphériques des deux rondelles de guidage (20A, 20B).

3. Dispositif (10) selon l'une quelconque des revendications précédentes, **caractérisé en ce que** les rondelles de guidage (20A, 20B) forment les éléments d'entrée de couple.

4. Dispositif (10) selon la revendication précédente, **caractérisé en ce que** le bord (58) d'extrémité radialement intérieur des masselottes (54A, 54B) est agencé par rapport à l'axe (B) de rotation à une distance radiale (D1) qui est inférieure à l'encombrement radial (D2) de l'ensemble formé par l'élément d'entrée (20A, 20B) et l'élément de sortie (12).

5. Dispositif (10) selon l'une quelconque des revendications précédentes, **caractérisé en ce que** l'élément de support (56) est réalisé venu de matière avec la rondelle de phasage (38).

6. Dispositif (10) selon l'une quelconque des revendications 1 à 4, **caractérisé en ce que** l'élément de support (56) est une pièce rapportée qui est fixée sur la rondelle de phasage (38).

7. Dispositif (10) selon la revendication précédente, **caractérisé en ce que** la rondelle de phasage (38) comporte au moins un bras (60) périphérique qui s'étend au moins partiellement dans la direction axiale afin de permettre le décalage axial de l'élément de support (56).

8. Dispositif (10) selon la revendication précédente, **caractérisé en ce que** le bras (60) axial est agencé radialement à l'extérieur par rapport aux organes élastiques (36).

9. Dispositif (10) selon l'une quelconque des revendications 6 à 8, **caractérisé en ce que** l'élément de support (56) est fixé à la rondelle de phasage par rivetage.

10. Dispositif (10) selon l'une quelconque des revendications 6 à 8, **caractérisé en ce que** l'élément de support (56) est fixé à la rondelle de phasage (38) par soudage.

11. Dispositif (10) selon l'une quelconque des revendications précédentes, **caractérisé en ce que** la patte de phasage (48) comporte des rebords (62) pour maintenir radialement les organes élastiques (36), les rebords (62) étant portés par une pièce rapportée qui est fixée sur la rondelle de phasage (38).

12. Dispositif (10) selon l'une quelconque des revendications précédentes, **caractérisé en ce que** l'élément de support (56) présente la forme d'un anneau qui s'étend dans un plan radial.

13. Convertisseur de couple comportant un moyeu (22) cannelé d'entrée de couple qui est solidaire en rotation avec l'élément (20A, 20B) d'entrée de couple, le convertisseur étant équipé d'un dispositif d'amortissement réalisé selon l'une quelconque des revendications précédentes, **caractérisé en ce qu'**au moins une masselotte (54A) est agencé radialement en vis-à-vis du moyeu (22) cannelé.

## Patentansprüche

1. Torsionsdämpfvorrichtung (10) zwischen einer Antriebswelle und einer angetriebenen koaxialen Welle mit axialer Ausrichtung in einem zeitweiligen Kraftfahrzeug-Kupplungssystem, wobei die Vorrichtung (10) mit ersten Torsionsdämpfmitteln versehen ist, die Folgendes umfassen:
- ein Drehmomenteingangselement (20A, 20B) und ein Drehmomentausgangselement (12), die drehend um eine Achse, die zu der der Wellen koaxial ist, montiert sind,
- mindestens zwei elastische Organe (36) mit umfänglicher Wirkung, die umfänglich in Serie zwischen dem Eingangselement (20A, 20B) und dem Ausgangselement (12) eingefügt sind,
- zwei radiale Führungsunterlegscheiben (20A, 20B), die axial zu beiden Seiten der elastischen Organe (36) eingerichtet sind und Mittel (46, 50, 52) zum axialen Halten der elastischen Organe (36) umfassen, wobei die Führungsunterlegscheiben (20A, 20B) einen umfänglichen Abschnitt umfassen, der sich radial von den Mitteln (46, 50, 52) zum axialen Halten nach außen erstrecken,
- mindestens eine radiale Phaseneinstellunterlegscheibe (38), die in Drehung in Bezug auf das Eingangselement (20A, 20B) und in Bezug auf das Ausgangselement (12) frei ist, wobei die Phaseneinstellunterlegscheibe (38) mindestens eine radiale Phaseneinstellpratze (48) umfasst, die umfänglich zwischen die zwei elastischen Organe (36) in Serie eingefügt ist,
wobei die Dämpfvorrichtung mit zweiten Torsionsdämpfmitteln versehen ist, die Folgendes umfassen:
- mindestens ein pendelartiges Fliehgewicht (54A, 54B), das in einer radialen Ebene oszillierend auf einem Tragelement (56), das in Drehung fest mit der Phaseneinstellunterlegscheibe (38) verbunden ist, montiert ist,
**dadurch gekennzeichnet, dass** das Tragelement (56) axial auf ein und derselben Seite in Bezug auf die umfänglichen Abschnitte der zwei Führungsunterlegscheiben (20A, 20B) derart versetzt ist, dass das pendelartige Fliehgewicht (54A, 54B) axial auf ein und derselben Seite in Bezug auf die peripheren Abschnitte der zwei Führungsunterlegscheiben (20A, 20B) versetzt ist.

2. Vorrichtung (10) nach dem vorhergehenden Anspruch, **dadurch gekennzeichnet, dass** die zweiten Dämpfmittel mindestens ein Paar Fliehgewichte (54A, 54B) umfassen, die axial in Gegenüberlage zu beiden Seiten des Tragelements (56) eingerichtet sind, wobei der axiale Versatz des Tragelements (56) derart ausgeführt wird, dass die zwei Fliehgewichte (54A, 54B) axial auf ein und derselben Seite der peripheren Abschnitte der zwei Führungsunterlegscheiben (20A, 20B) versetzt werden.

3. Vorrichtung (10) nach einem der vorhergehenden Ansprüche, **dadurch gekennzeichnet, dass** die Führungsunterlegscheiben (20A, 20B) die Drehmomenteingangselemente bilden.

4. Vorrichtung (10) nach dem vorhergehenden Anspruch, **dadurch gekennzeichnet, dass** der radial innere Endrand (58) der Fliehgewichte (54A, 54B) in Bezug auf die Rotationsachse (B) in einer radialen Entfernung (D1), die kleiner ist als der radiale Platzbedarf (D2) der Einheit, die aus dem Eingangselement (20A, 20B) und dem Ausgangselement (12) gebildet ist, eingerichtet ist.

5. Vorrichtung (10) nach einem der vorhergehenden Ansprüche, **dadurch gekennzeichnet, dass** das Tragelement (56) aus einem Stück mit der Phaseneinstellunterlegscheibe (38) hergestellt ist.

6. Vorrichtung (10) nach einem der Ansprüche 1 bis 4, **dadurch gekennzeichnet, dass** das Tragelement (56) ein angebautes Teil ist, das auf der Phaseneinstellunterlegscheibe (38) befestigt ist.

7. Vorrichtung (10) nach dem vorhergehenden Anspruch, **dadurch gekennzeichnet, dass** die Phaseneinstellunterlegscheibe (38) mindestens einen umfänglichen Arm (60) umfasst, der sich mindestens teilweise in die axiale Richtung erstreckt, um das axiale Versetzen des Tragelements (56) zu erlauben.

8. Vorrichtung (10) nach dem vorhergehenden Anspruch, **dadurch gekennzeichnet, dass** der axiale Arm (60) radial außerhalb in Bezug auf die elastischen Organe (36) eingerichtet ist.

9. Vorrichtung (10) nach einem der Ansprüche 6 bis 8, **dadurch gekennzeichnet, dass** das Tragelement (56) durch Nieten an der Phaseneinstellunterlegscheibe befestigt ist.

10. Vorrichtung (10) nach einem der Ansprüche 6 bis 8, **dadurch gekennzeichnet, dass** das Tragelement (56) an der Phaseneinstellunterlegscheibe (38) durch Schweißen befestigt ist.

11. Vorrichtung (10) nach einem der vorhergehenden Ansprüche, **dadurch gekennzeichnet, dass** die Phaseneinstellpratze (48) Krempen (62) umfasst, um radial die elastischen Organe (36) zu halten, wobei die Krempen (62) von einem angebauten Teil getragen werden, das an der Phaseneinstellunterlegscheibe (38) befestigt ist.

12. Vorrichtung (10) nach einem der vorhergehenden Ansprüche, **dadurch gekennzeichnet, dass** das Tragelement (56) die Form eines Rings aufweist, der sich in einer radialen Ebene erstreckt.

13. Drehmomentwandler, der eine Drehmomenteingangs-Kerbzahnnabe (22) umfasst, die in Drehung fest mit dem Drehmomenteingangselement (20A, 20B) verbunden ist, wobei der Wandler mit einer Dämpfvorrichtung ausgestattet ist, die nach einem der vorhergehenden Ansprüche hergestellt ist, **dadurch gekennzeichnet, dass** mindestens ein Fliehgewicht (54A) radial in Gegenüberlage zu der Kerbzahnnabe (22) eingerichtet ist.

## Claims

1. Device (10) for damping torsion between a coaxial engine shaft and driven shaft of axial orientation in a temporary coupling system of a motor vehicle, the device (10) being equipped with first torsion damping means which comprise:
- a torque input element (20A, 20B) and a torque output element (12) which are rotatably mounted about an axis coaxial to that of the shafts;
- at least two elastic members (36) with circumferential action which are interposed circumferentially in series between the input element (20A, 20B) and the output element (12);
- two radial guide washers (20A, 20B) which are arranged axially on either side of the elastic members (36) and which comprise means (46, 50, 52) for axially retaining the elastic members (36), the guide washers (20A, 20B) comprising a peripheral portion which extends radially outwardly from the axial retaining means (46, 50, 52);
- at least one radial phasing washer (38) which is free to rotate with respect to the input element (20A, 20B) and with respect to the output element (12), the phasing washer (38) comprising at least one radial phasing lug (48) which is interposed circumferentially between the two elastic members (36) in series;
the damping device being equipped with second torsion damping means which comprise:
- at least one pendulum flyweight (54A, 54B) which is oscillatably mounted in a radial plane on a support element (56) which is coupled in rotation with the phasing washer (38);
**characterized in that** the support element (56) is offset axially on one and the same side with respect to the peripheral portions of the two guide washers (20A, 20B) in such a way that the pendulum flyweight (54A, 54B) is offset axially on one and the same side with respect to the peripheral portions of the two guide washers (20A, 20B).

2. Device (10) according to the preceding claim, **characterized in that** the second damping means comprise at least one pair of flyweights (54A, 54B) which are arranged axially opposite one another on either side of the support element (56), the support element (56) being axially offset in such a way that the two flyweights (54A, 54B) are offset axially on one and the same side of the peripheral portions of the two guide washers (20A, 20B).

3. Device (10) according to either one of the preceding claims, **characterized in that** the guide washers (20A, 20B) form the torque input elements.

4. Device (10) according to the preceding claim, **characterized in that** the radially inner end edge (58) of the flyweights (54A, 54B) is arranged with respect to the axis (B) of rotation at a radial distance (D1) which is less than the radial overall size (D2) of the assembly formed by the input element (20A, 20B) and the output element (12).

5. Device (10) according to any one of the preceding claims, **characterized in that** the support element (56) is produced in one piece with the phasing washer (38).

6. Device (10) according to any one of Claims 1 to 4, **characterized in that** the support element (56) is an add-on part which is fixed to the phasing washer (38).

7. Device (10) according to the preceding claim, **characterized in that** the phasing washer (38) comprises at least one peripheral arm (60) which extends at least partially in the axial direction so as to allow the support element (56) to be offset axially.

8. Device (10) according to the preceding claim, **characterized in that** the axial arm (60) is arranged radially to the outside with respect to the elastic members (36).

9. Device (10) according to any one of Claims 6 to 8, **characterized in that** the support element (56) is fixed to the phasing washer by riveting.

10. Device (10) according to any one of Claims 6 to 8, **characterized in that** the support element (56) is fixed to the phasing washer (38) by welding.

11. Device (10) according to any one of the preceding claims, **characterized in that** the phasing lug (48) comprises lips (62) to retain the elastic members (36) radially, the lips (62) being borne by an add-on part which is fixed to the phasing washer (38).

12. Device (10) according to any one of the preceding claims, **characterized in that** the support element (56) has the shape of a ring which extends in a radial plane.

13. Torque converter comprising a splined torque input hub (22) which is coupled in rotation with the torque input element (20A, 20B), the converter being equipped with a damping device embodied according to any one of the preceding claims, **characterized in that** at least one flyweight (54A) is arranged radially opposite the splined hub (22).
